# EUROPEAN PATENT APPLICATION

(11) **EP 2 241 405 A1**
(43) Date of publication of application: **20.10.2010**
(21) Application number: 09163801.5
(22) Date of filing: 25.06.2009
(51) Int. Cl.: B25B 27/02, B25B 27/06, B23P 19/06

(54) **Hydraulic puller**

(30) Priority: 17.04.2009 TW 98112764
(71) Applicant: Chen, Yu-Chen, Province of China (TW)
(72) Inventor: Chen, Yu-Chen, Province of China (TW)
(74) Representative: 2K Patentanwälte Blasberg Kewitz & Reichel

(57) **Abstract**

A hydraulic puller includes a first hydraulic power system and a second hydraulic power system that are coaxially connected, wherein the first hydraulic power system moves a thrust shaft back and forth while the second hydraulic power system moves a pulling-rod base back and forth; a jaw-positioning unit assembled to the first hydraulic power system; a rod-positioning unit assembled to the pulling-rod base; and jaws and pulling rods detachably connected to the jaw-positioning unit and the rod-positioning unit, respectively. Thereby the hydraulic puller is configured as a two jaw puller or a three-jaw puller and mounted on a trolley having powered wheel and a lifter.

## Description

### BACKGROUND OF THE INVENTION

### 1. Technical Field

The present invention relates to a hydraulic puller according to the preamble of Claim 1. Accordingly, the present invention severally relates to hydraulic pullers and more particularly, to a hydraulic puller that is detachably mounted on a trolley.

### 2. Description of Related Art

A known movable hydraulic puller, taking the disclosure of US Patent No. 5,167,057 for example, primarily comprises a transport cart, a power lift assembly mounted on the transport cart, a hydraulic pump means, and a puller supported by the power lift assembly. The puller includes a base, arcuate jaws, and a pushing adapter. The hydraulic pump means controls the base to linearly move back and forth so as to make the jaws spread apart or retracted inward, thereby grasping or releasing an external wheel-shaped member, such as a bearing, a gears, or a pulley. The hydraulic pump means also controls the pushing adapter to move back and forth. When moving forth, the pushing adapter applies a heavy load against an axle on which the wheel-shaped member is mounted so that the jaws pull and remove the wheel-shaped member from the axle.

The jaws assembled to the base may be two or three. However, once the conventional hydraulic puller is fabricated, the number of the jaws is fixed and not adjustable to a user on an operation site.

The aforementioned transport cart uses a post to support the lift assembly so that the lift assembly is shifted along and positioned on the post by the hydraulic pump means. However, the sole post tends to deform due to overload. Besides, since there is no supporting means helping holding the lift assembly in position, the puller is likely to accidentally crash in operation.

### SUMMARY OF THE INVENTION

The present invention has been accomplished under the circumstances in view to provide a hydraulic puller as described in the claims.

The hydraulic puller is detachably mounted on a trolley and thus has the following advantages.

Firstly, the number of jaws used in the hydraulic puller is adjustable so as to allow a user to optionally assemble two or three said jaws to the hydraulic puller.

Besides, the trolley includes two posts and supporting means so as to improve stability and safety of moving and positioning the hydraulic puller.

The trolley carrying the hydraulic puller is equipped with powered wheel assemblies so as to be propelled by a remote control.

The trolley carrying the hydraulic puller is equipped with at least one optical monitoring device so as to allow a user to safely monitor operation of the hydraulic puller at a remote site.

The hydraulic puller of the present invention comprises:
a first hydraulic power system and a second hydraulic power system coaxially connected, wherein the hydraulic power system moves a thrust shaft back and forth while the second hydraulic power system moves a pulling-rod base back and forth;
a jaw-positioning unit attached outside a cylinder of the first hydraulic power system;
a rod-positioning unit attached outside the pulling-rod base; and
jaws and pulling rods pivotally connected to the jaw-positioning unit and the rod-positioning unit, respectively.

### BRIEF DESCRIPTION OF THE DRAWINGS

**Figure 1** is a perspective view of a hydraulic puller mounted on a trolley according to the present invention.
**Figure 2** is a perspective view of an optical monitoring device to be assembled to the trolley according to the present invention.
**Figure 3** is a perspective view of the disclosed hydraulic puller with three jaws.
**Figure 4** illustrates assembly of a hook and an adjuster according to the present invention.
**Figures 5** and **6** are plane drawings describing relative position of the jaws and the hooks.
**Figures 7****,** **8****,** and **9** are lateral views of the subject matter of the present invention describing operation thereof.
**Figures 10** and **11** depict a supporting means of the trolley hydraulic puller according to the present invention.
**Figure 12** is a schematic drawing showing the hydraulic puller of the present invention hoisted by a hoisting means.
**Figure 13** is a perspective view of the hydraulic puller with two jaws.

### DETAILED DESCRIPTION OF THE PREFERRED EMBODIMENT

The present invention provides a hydraulic puller to be detachably mounted on a trolley. The subject matter of the present invention comprises the trolley **10,** a lifter **20**, the hydraulic puller **30** and at least a pair of supporting means **40.**

The trolley **10** includes a base **11** and a pair of posts **12** erected at two opposite sides of the base **11.** The base **11** is equipped with a plurality of powered wheel assemblies **13.**

The lifter **20** is assembled to the posts **12** and driven by a power device **21** to move vertically along the posts **12.**

Each of the supporting means **40** includes a positioning plate **41** assembled to the post **12** and a fixer **42** assembled to the lifter **20.** The fixer **42** may be fixedly connected with the positioning plate **41** so that the lifter **20** is stably supported and firmly positioned with respect to the post **12** by the fixer **42.**

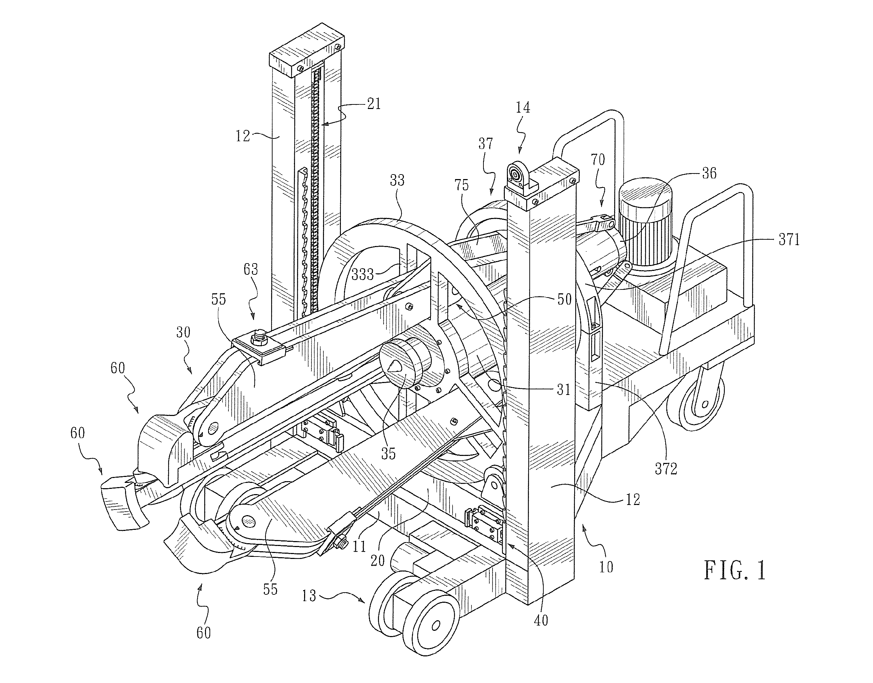

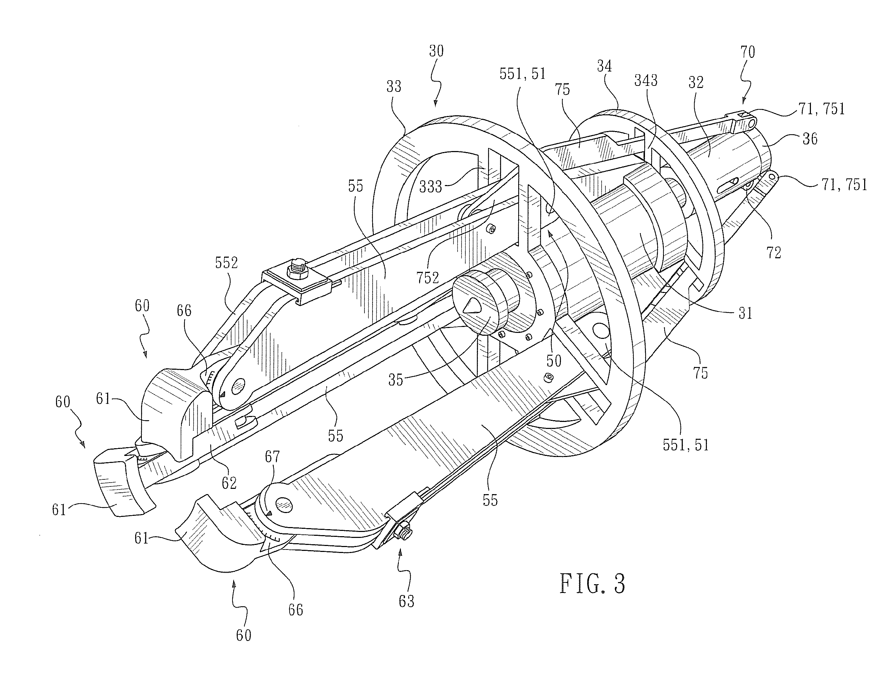

Please refer to **Figures 1** and **3** for the configuration of the hydraulic puller **30.** Therein, the hydraulic puller **30** includes a first hydraulic power system **31** and a second hydraulic power system **32** that are coaxially connected. The first hydraulic power system **31** has its cylinder fixed to a first frame **33** and a second frame **34** that are both wheel-shaped and assembled to the lifter **20.** A third frame **37** is fixedly attached to the trolley **10** for retaining the second frame **34** therein. The third frame **37** is composed of two semicircular members **371, 372,** wherein the upper semicircular member **371** is removable so as to facilitate installation of the second frame **34.** The first hydraulic power system **31** serves to drive a thrust shaft **35** at a center thereof to move back and forth while the second hydraulic power system **32** drives a pulling-rod base **36** to move back and forth.

A jaw-positioning unit **50** includes three first jaw holders **51** and a second jaw holder **52** that are attached to an outer periphery of the cylinder of the first hydraulic power system **31,** wherein the three first jaw holders **51** are separated by 120 degrees, and the second jaw holder **52** is separated from one of the first jaw holders **51** by 180 degrees.

A plurality of jaws **55** are used in the hydraulic puller **30.** Three said jaws **55** may each have a positioning end **551** thereof pivotally coupled with a respective said first jaw holder **51** so as to make the hydraulic puller **30** a three-jaw puller. Alternatively, two said jaws **55** may be coupled with one said first jaw holder **51** and the second jaw holder **52** so as to make the hydraulic puller **30** a two-jaw puller. Each said jaw **55** has a free end equipped with an adjustable hook **60.** The first frame **33** has a plurality of spokes **333** coming in pairs and each pair of the spokes **333** defines a space for allowing the corresponding jaw **55** to pass therethrough and retaining the jaw **55** from transverse movement.

A rod-positioning unit **70** includes three first rod holders **71** and a second rod holder **72** that are attached to an outer periphery of the pulling-rod base **36,** wherein the three first rod holders **71** are separated by 120 degrees, and the second rod holder **72** is separated from one said first rod holder **71** by 180 degrees.

A plurality of pulling rods **75** are used in the hydraulic puller **30.** Three said pulling rods **75** may each have a first end **751** thereof coupled with a respective said first rod holder **71.** Alternatively, two said pulling rods **75** may have their first ends **751** coupled with one said first rod holder **71** and the second rod holder **72,** respectively. Each said pulling rod **75** has a second end **752** pivotally coupled with a corresponding said jaw **55.** The second frame **34** has a plurality of spokes **343** coming in pairs and each pair of the spokes **343** defines a space for allowing the corresponding pulling rod **75** to pass therethrough and retaining the pulling rod **75** from transverse movement.

Referring to **Figure 3****,** in the three-jaw puller that has three said jaws **55** with their positioning ends **551** pivotally coupled with the first jaw holders **51** of the first hydraulic power system **31,** three said pulling rods **75** have to be connected to the three jaws **55** and the first rod holders **51** so as to control the three-jaw puller.

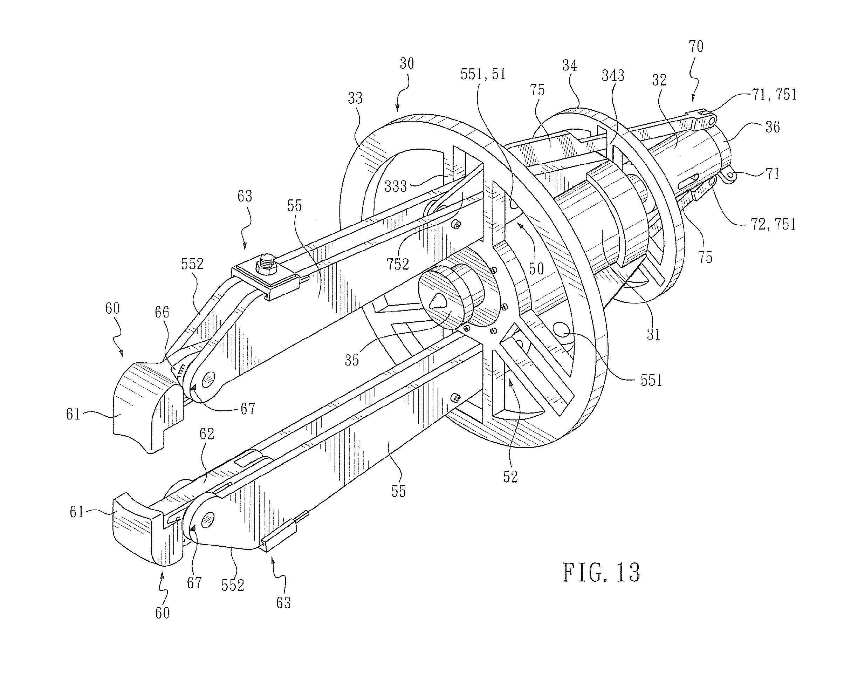

Referring to **Figure 13****,** in the two-jaw puller that has two said jaws **55** with their positioning ends **551** pivotally coupled with the first jaw holder **51** and the second jaw holder **52,** two said pulling rods **75** have to be connected to the two jaws **55** and the first rod holder **51** as well as the second rod holder **52** so as to control the two-jaw puller.

Due to the aforementioned structure where the jaws **55** are detachable and re-assemblable, the disclosed hydraulic puller **30** allows a user to change the number of the jaws **55** between two and three directly on an operation site.

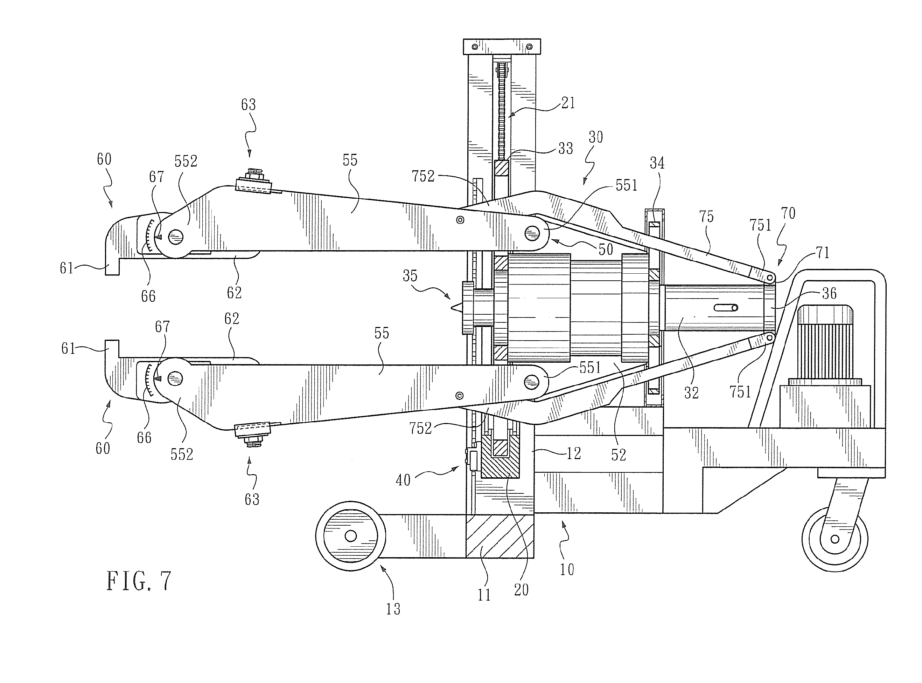

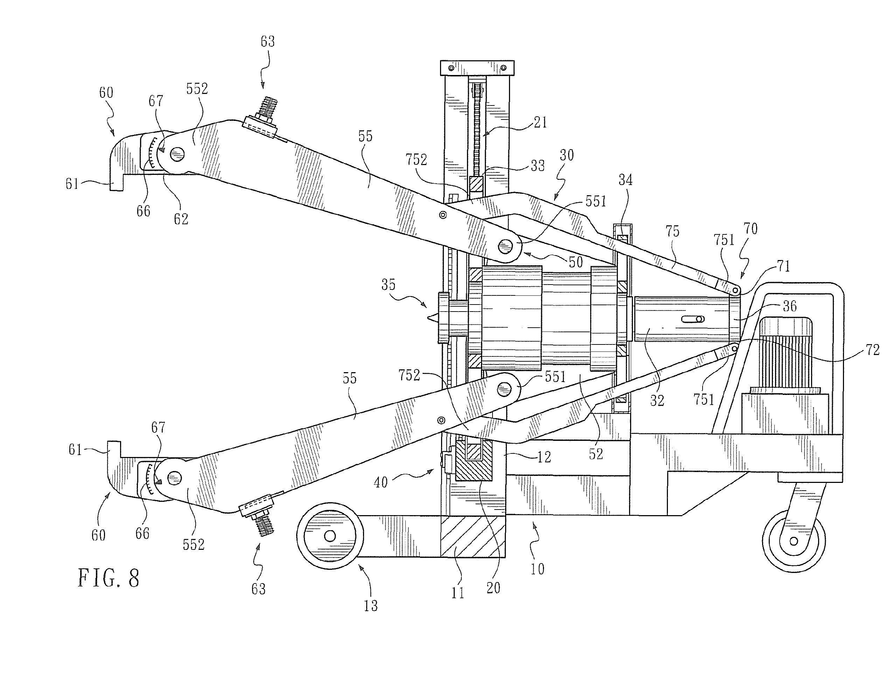

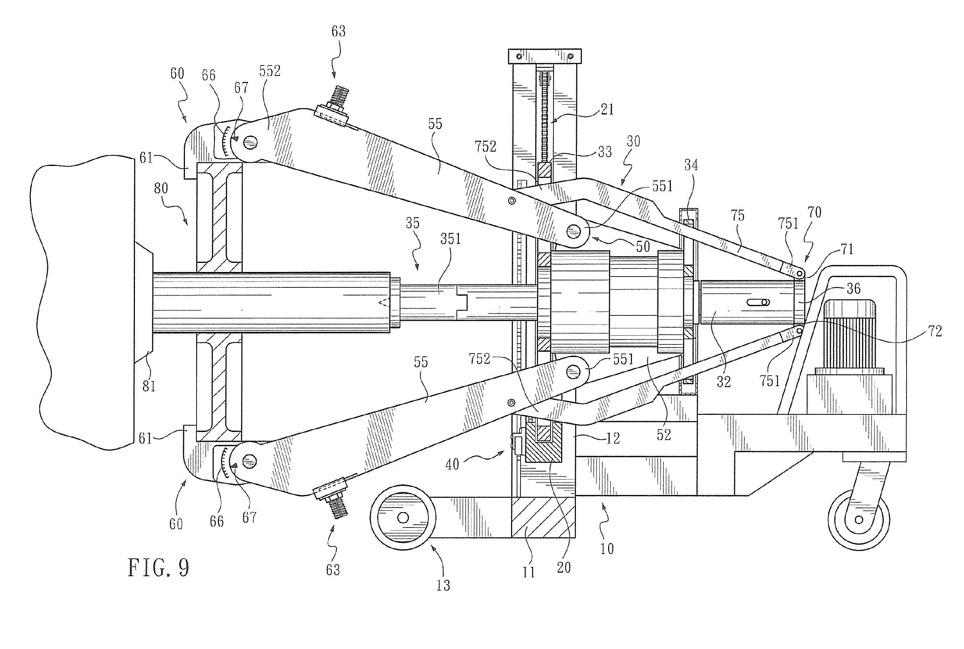

Referring to **Figures 7****,** **8** and **9****,** the second hydraulic power system **32** drives the pulling-rod base **36** to move back and forth so as to spread apart or retract inward the jaws **55.**

When the pulling-rod base **36** moves forward, the jaws **55** pivot toward an axis of the hydraulic puller **30** against their positioning ends **551.** When the pulling-rod base **36** moves backward, the jaws **55** pivot away from the axis of the hydraulic puller **30** on the positioning ends **551.** The hooks **60** serve to grasp a wheel-shaped member **80** such as a bearing, a gear, or a pulley with grasping ends **61** thereof. The first hydraulic power system **31** controls the thrust shaft **35** to apply a heavy load against an axle **81** on which the wheel-shaped member **80** is mounted so that the jaws **55** pull and remove the wheel-shaped member **80** from the axle **81.** The thrust shaft **35** may further connected with an extended shaft **351** for getting increased length.

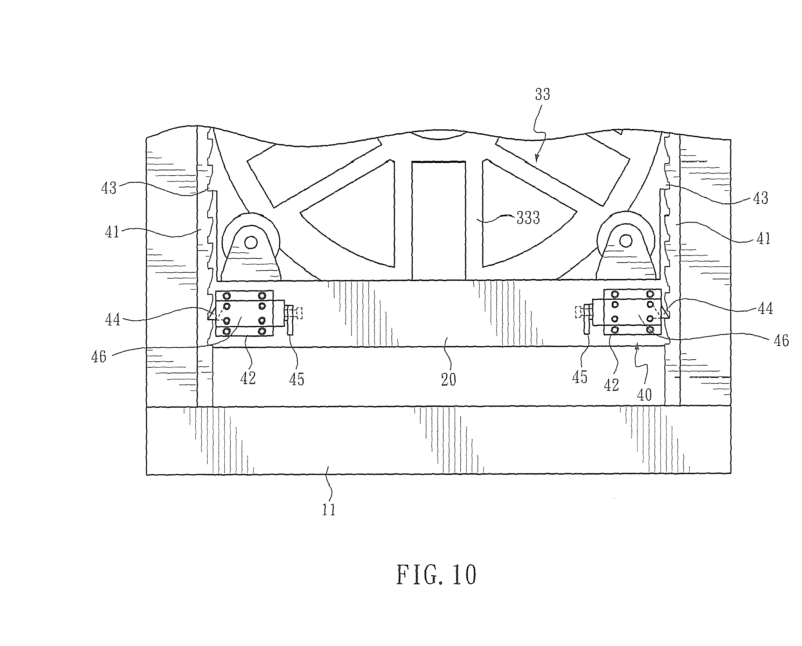

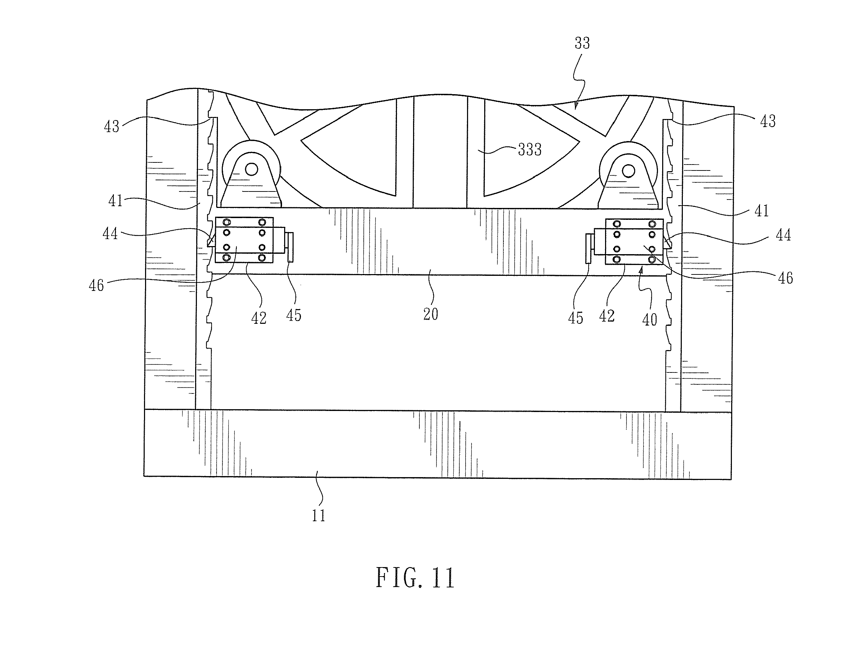

Referring to **Figures 10** and **11**, the supporting means **40** includes the positioning plate **41** and the fixer **42.** The positioning plate **41** has a lateral facing the fixer **42** formed with a plurality of notches **43.** The fixer **42** includes an extendable rod **44** for engaging with any of the notches **43** so as to firmly position the lifter **20** with respect to the post **12.** The extendable rod **44** is connected to an operating member **45** so that the extendable rod **44** shifts in length when the operating member **45** is controlled by a user. In the present embodiment, the operating member **45** is a rotatble member. When the operating member **45** is set in a first position, the extendable rod **44** is retracted in a base **46** of the supporting means **40** so that the lifter **20** is allowed to freely move along the posts **12,** thereby changing the altitude of the puller. When the operating member **45** is rotated to a second position, the extendable rod **44** protrudes from the base **46** and gets coupled with one said notch **43** so as to support and position the lifter **20.**

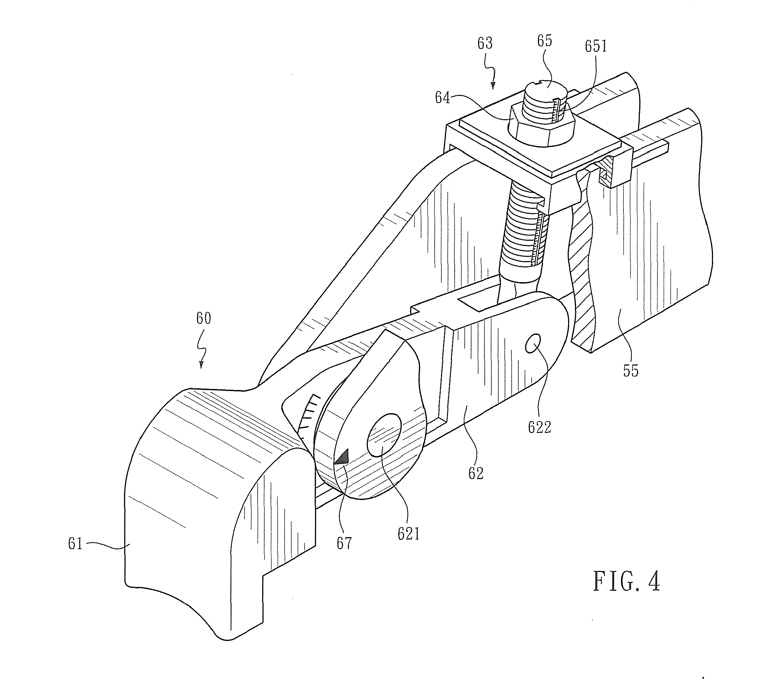

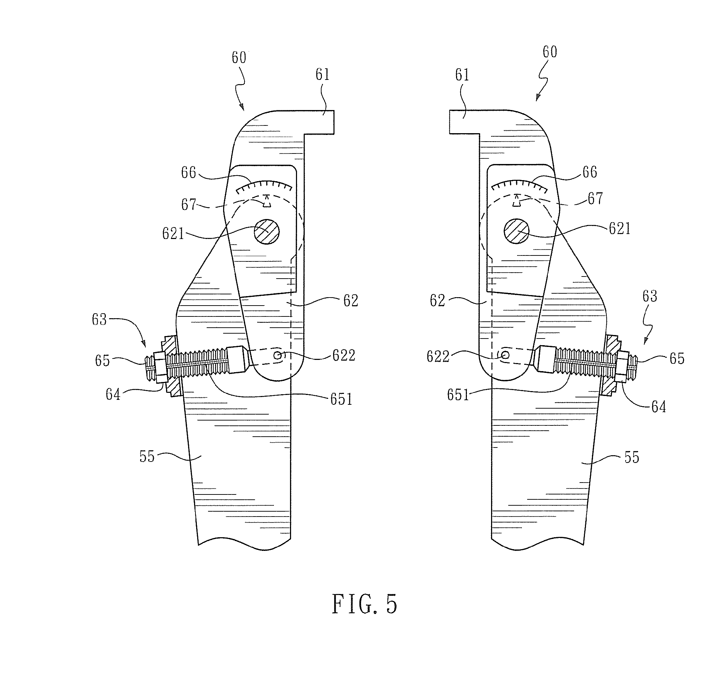

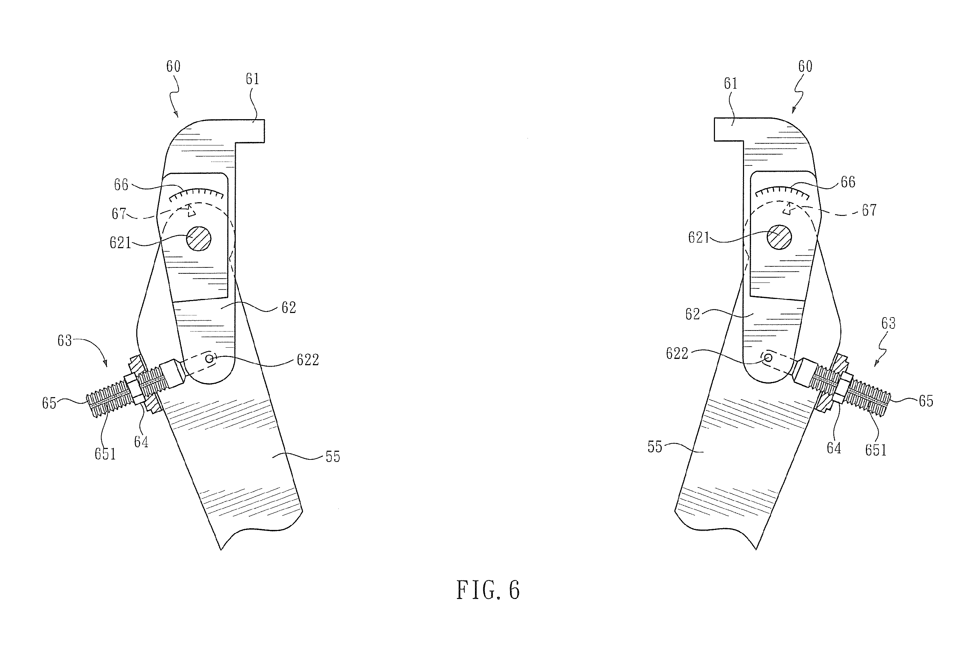

Please refer to **Figures 3** to **6** for the adjustable hooks **60** at the free ends of the jaws **55.** Each said hook **60** is formed with a grasping end **61** and a body **62.** The body **62** has a first joint **621** and a second joint **622.** The first joint **621** is pivotally connected with the free end **552** of the jaw **55** while the second joint **622** is pivotally connected with an adjuster **63** that is further pivotally connected with the jaw **55.** The adjuster **63** includes a rotatably nut **64** set at a spine of the jaw **55,** and a bolt **65** coupled with the nut **64** and extending into the jaw **55.** The bolt **65** has a bottom connected with the second joint **622** of the hook **60.** In responding to rotation of the nut **64,** the bolt **65** linearly moves to displace the second joint **622,** thereby making the hook **60** pivot on the first joint **621** and in turn changing an angle between the jaw **55** and the hook **60.** In addition, a scale **66** and an indicator **67** are correspondingly and respectively provided at the free end **522** of the jaw **55** and the hook **60** so as to indicate the angle between the jaw **55** and the hook **60.** Moreover, the bolt **65** may be also provided with a scale **651** so as to facilitate accurate adjustment.

Seeing **Figures 1****,** **4** and **5****,** the trolley **10** carrying the hydraulic puller **30** has said powered wheel assemblies **13** so that the trolley **10** is self-propelled under control of a remote control (not shown). While the powered wheel assemblies **13** are powered by a gear motor, a differential mechanism may be applied to the powered wheel assemblies **13** for ensure stable and smooth direction change of the trolley **10.**

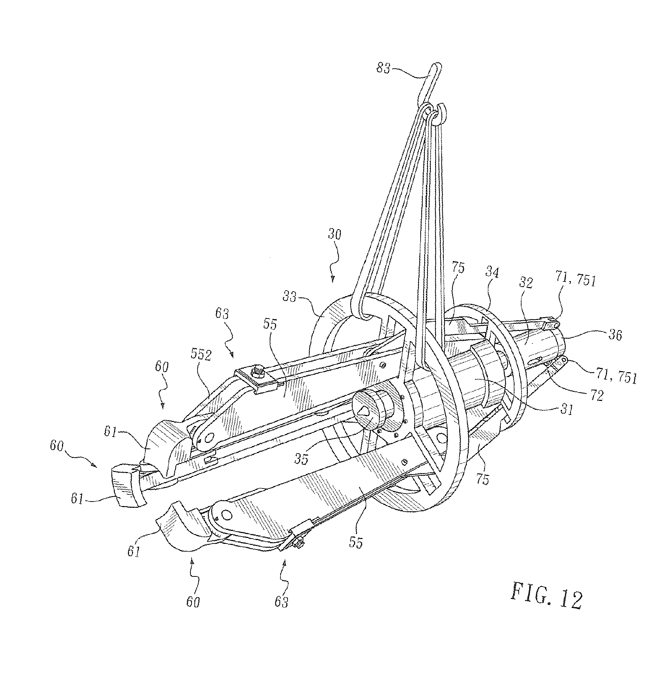

In **Figure 12****,** the hydraulic puller **30** may be detached from the trolley **10.** For this end, the first frame **33** and the second frame **34** may be bound with a hoisting means **83** so that the hydraulic puller **30** is lifted from the trolley **10** to a desired altitude for facilitating pulling operation.

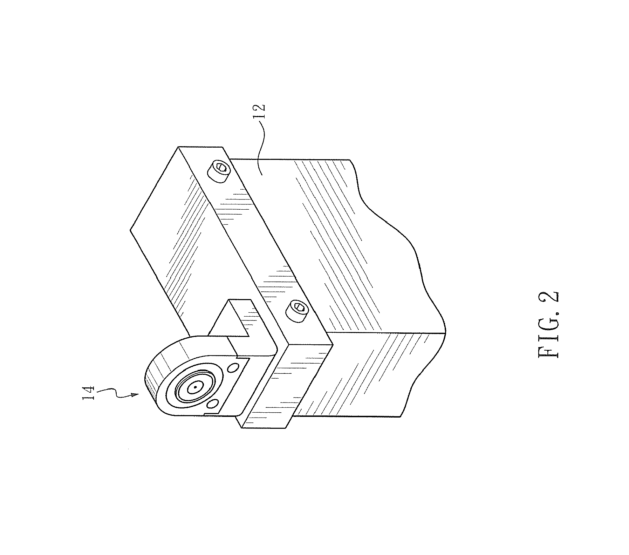

At least one optical monitoring device **14** may be arranged on the trolley **10** (as shown in **Figures 1** and **2****)** so that a user can safely monitor the pulling operation from a remote site.

## Claims

1. A hydraulic puller (30) for removing a wheel-shaped member (80) from an axle (81) on which the wheel-shaped member (80) is mounted, the hydraulic puller (30) being **characterized by**:
a first hydraulic power system (31) and a second hydraulic power system (32) coaxially connected, wherein the first hydraulic power system (31) moves a thrust shaft (35) back and forth while the second hydraulic power system (32) moves a pulling-rod base (36) back and forth;
a jaw-positioning unit (50) including a plurality of first jaw holders (51)
attached outside a cylinder of the first hydraulic power system (31) and separated by a predetermined angle;
jaws (55) of a predetermined number, each said jaw (55) having a
positioning end (551) pivotally coupled with a respective said first jaw holder (51);
a rod-positioning unit (70) including first rod holders (71) attached outside
the pulling-rod base (36) and corresponding to the first jaw holders (51); and
pulling rods (75) of a number equal to the number of the jaws (55), each
pulling rod (75) having two opposite ends pivotally connected to a respective said jaw (55) and a respective said first rod holder (71), respectively.

2. The hydraulic puller (30) of Claim 1, wherein the first hydraulic power system (31) and the second hydraulic power system (32) are assembled to a lifter (20) that is further assembled to a trolley (10), in which the trolley (10) including a base (11) and a pair of posts (12) erected at two opposite sides of the base (11), and the lifter (20) is mounted on the posts (12).

3. The hydraulic puller (30) of Claim 2, wherein a plurality of powered wheel assemblies (13) are provided at a bottom of the trolley (10).

4. The hydraulic puller (30) of Claim 2 or 3, further comprising a supporting means (40) having a positioning plate (41) assembled to a corresponding said post (12) and a fixer (42) assembled to the lifter (20), wherein the fixer (42) is configured to couple with the positioning plate (41) that has a lateral facing the fixer (42) formed with a plurality of notches (43), and the fixer (42) includes an extendable rod (44) for engaging with any of the notches (43), in which the extendable rod (44) is connected to an operating member (45) that is controlled by a user.

5. The hydraulic puller (30) of Claim 1, wherein the jaw-positioning unit (50) includes three said first jaw holders (51) and a second jaw holder (52) that are attached outside the cylinder of the first hydraulic power system (31), wherein the three first jaw holders (51) are separated by 120 degrees, and the second jaw holder (52) is separated from one said first jaw holder (51) by 180 degrees.

6. The hydraulic puller (30) of Claim 5, wherein the rod-positioning unit (70) includes three said first rod holders (71) and a second rod holder (72) that are attached outside the pulling-rod base (36), wherein the three first rod holders (71) are separated by 120 degrees, and the second rod holder (72) is separated from one said first rod holder (71) by 180 degrees.

7. The hydraulic puller (30) of Claim 1, wherein adjustable hooks (60) are provided at free ends of the jaws (55), each said hook (60) being formed with a grasping end (61) and a body (62), the body (62) including a first joint (621) and a second joint (622), the first joint (621) being pivotally connected with the free end (552) of the jaw (55) while the second joint (622) is pivotally connected with an adjuster (63) that is further pivotally connected with the jaw (55), the adjuster (63) including a rotatably nut (64) set at a spine of the jaw (55), a bolt (65) coupled with the nut (64) and extending into the jaw (55) to connect with the second joint (622) of the hook (60).

8. The hydraulic puller (30) of Claim 7, wherein a scale (66) and an indicator 67 are correspondingly and respectively provided at the free end (552) of the jaw (55) and the hook (60).

9. The hydraulic puller (30) of Claim 7, wherein the bolt (65) is provided with a scale (651).

10. The hydraulic puller (30) of Claim 7, wherein at least one optical monitoring device (14) is provided on the trolley (10).
